# EUROPÄISCHE PATENTSCHRIFT

(11) **EP 1 191 476 B1**
(45) Veröffentlichungstag und Bekanntmachung des Hinweises auf die Patenterteilung: **12.04.2006**
(21) Anmeldenummer: 01122908.5
(22) Anmeldetag: 25.09.2001
(51) Int. Cl.: G06T 7/00, G06K 9/64

(54) **Vorrichtung und Verfahren zur Berechnung einer zwei Abbildungen verbindenden Transformation**
Device and method for calculating a matching transformation between two images
Dispositif et procédé de calcul d'une transformation de correspondance pour deux images

(30) Priorität: 26.09.2000 DE 10048029
(43) Veröffentlichungstag der Anmeldung: 27.03.2002
(73) Patentinhaber: Philips Intellectual Property & Standards GmbH, 20099 Hamburg (DE); Koninklijke Philips Electronics N.V., 5621 BA Eindhoven (NL)
(72) Erfinder: Rösch, Peter, Dr., 52064 Aachen (DE); Weese, Jürgen, Dr., 52064 Aachen (DE)
(74) Vertreter: Volmer, Georg

(56) Entgegenhaltungen:
- KANG-PING LIN ET AL: "An elastic mapping algorithm for tomographic images" PROCEEDINGS OF THE 15TH ANNUAL INTERNATIONAL CONFERENCE OF THE IEEE, 28. Oktober 1993 (1993-10-28), Seiten 40-41, XP010574187
- CHEN L C; YANG T T: "Progressive piecewise registration of orthophotos and airborne scanner images" PROCEEDINGS OF THE SPIE, Bd. 2357, 1994, Seiten 116-123, XP009038668
- KOSTELEC PETER J ET AL: "Multiresolution elastic image registration" MEDICAL PHYSICS, AMERICAN INSTITUTE OF PHYSICS. NEW YORK, US, Bd. 25, Nr. 9, September 1998 (1998-09), Seiten 1593-1604, XP012010559 ISSN: 0094-2405

## Beschreibung

Die Erfindung betrifft ein Verfahren zur Berechnung der Transformation, welche zwei vorzugsweise durch Computertomographie oder Kernspintomographie erhaltene Abbildungen eines Objektes ineinander überführt, wobei zunächst sukzessive die lokalen Transformationsparameter für Teilbereiche der Abbildungen berechnet werden und wobei anschließend hieraus die gesamte Transformation berechnet wird. Ferner betrifft sie eine Vorrichtung zur Durchführung eines derartigen Verfahrens.

Bei zahlreichen medizinischen und nicht-medizinischen Anwendungen bildgebender Verfahren tritt das Problem auf, dass zwei von demselben Objekt aufgenommene Abbildungen daraufhin zu analysieren sind, welche Elemente in den Abbildungen einander entsprechen und in welcher Weise sich diese Elemente von einer zur anderen Abbildung verschoben und/oder deformiert haben. Derartige Vergleiche von zwei Abbildungen dienen insbesondere der Analyse flexibler Objekte und Formen. Im Rahmen der automatischen Analyse von Abbildungspaaren wird dabei diejenige mathematische Transformation berechnet, welche die beiden Abbildungen ineinander überführt. Eine solche Transformation kann auch als ein Bewegungs- und Deformationsfeld bezeichnet werden, da sie angibt, wie sich jeder Punkt der ersten Abbildung zur anderen Abbildung hin bewegt hat beziehungsweise wie ein Flächen- oder Volumenelement der ersten Abbildung in der zweiten Abbildung deformiert worden ist. Im Rahmen medizinischer Anwendungen kann die lokale Verteilung der Deformation oder Bewegung in einer Abbildung direkt visualisiert werden, um die Diagnose zum Beispiel eines Tumorwachstums zu unterstützen. Weiterhin kann die Deformation die elastischen Eigenschaften des Gewebes repräsentieren und somit als Basis für kardiale Anwendungen, für einen Vergleich von Abbildungen vor und nach einer Behandlung sowie für die Kompensation von Patientenbewegungen verwendet werden.

Für die automatische Berechnung eines Bewegungs- und DeformationsFeldes, welches zwei verschiedene Abbildungen desselben Objektes ineinander überführt, sind verschiedene Verfahren vorgeschlagen worden. Viele Algorithmen versuchen, eine Korrespondenz zwischen Gratlinien (J. Declerck, G. Subsol, J.-P. Thirion, N. Ayache, Automatic retrieval of anatomical structures in 3d medical images, Lecture Notes in Computer Science 950 (1995), S. 153) oder Bereichsgrenzen (D. Davatzikos, J.L. Prince, R.N. Bryan, Image Registration Based on Boundary Mapping, IEEE Trans. Medical Imaging 15 (1996), S. 112) herzustellen, die in beiden Abbildungen extrahiert worden sind. Bei diesen Verfahren wird jedoch nur ein Teil der in den Bildern enthaltenen Information verwendet. Die Verfahren liefern daher Transformationsparameter nur an den Linien der ausgewählten Merkmale, und die Transformation muss anschließend auf das gesamte Volumen ausgedehnt werden.

Ein alternativer Ansatz besteht in einer auf Grauwerten basierenden elastischen Registrierung, wobei der gesamte Bildinhalt verwendet wird. Die Berechnung eines Bewegungs- und Deformationsfeldes bedeutet, dass jedem Untervolumen der Abbildung (oder sogar jedem Voxel) ein Satz von Transformationsparametern zugeordnet werden muss. Die Berechnung ist daher eigentlich ein Optimierungsverfahren zur Bestimmung desjenigen Feldes, welches eine maximale Ähnlichkeit zwischen den Abbildungen erzeugt. Durch ein Bewegungs- und Deformationsfeld wird demnach eine sehr große Anzahl von Freiheitsgraden repräsentiert. Globale Optimierungsschemata für die elastische Registrierung ändern während jedes Berechnungsschrittes das gesamte Bewegungs- und Deformationsfeld und damit eine große Zahl an Parametern. Bei diesen Verfahren ist eine große Anzahl lokaler Optima zu erwarten, und in vielen Fällen bleibt das Optimierungsverfahren daher in einem der lokalen Optima stecken, anstatt das gewünschte globale Optimum zu erreichen.

Bei einem anderen Verfahren, der Blockzuordnung (block matching), wird die Abbildung in kleinere Abschnitte aufgespalten, und diese werden separat zugeordnet (P.J. Kostelec, J.B. Weaver, D.M. Healy, Jr., Multiresolution elastic image registration, Med. Phys. 25 (1998), S. 1593). Das Verfahren, welches am Beispiel von 2D-Abbildungen gezeigt und für 3D-Abbildungen vorgeschlagen wurde, beginnt mit einer starren Registrierung der gesamten Abbildung. Bei einer starren Transformation findet lediglich eine Verschiebung (Translation und Rotation der Abbildung) statt, jedoch keine Deformation, das heißt eine ortsabhängige Dehnung oder Stauchung von Längen. Nach der starren Registrierung wird die Abbildung sukzessiv in immer kleinere Abschnitte aufgeteilt, welche dann erneut starr zugeordnet werden. Jeder Abschnitt verwendet dabei die im "Elternblock" gefundenen Parameter der Registrierung als Anfangsschätzwerte für die eigene Registrierung. Obwohl dieses Verfahren für 2D-Abbildungen mit verhältnismäßig kleinen Deformationen akzeptable Resultat liefert, ist bei Vorhandensein großer Deformationen in 3D-Abbildungen nicht einmal eine näherungsweise starre Registrierung von Abbildungsteilen möglich, die größer als etwa 1 cm sind. Die Qualität der Anfangsschärzwerte ist daher mit hoher Wahrscheinlichkeit für erfolgreiche Registrierungen in den letzten Schritten des Algorithmus unzureichend, in denen eine gewisse Überlappung zwischen kleinen einander entsprechenden Blöcken in der Quelle und im Zielbild erforderlich ist.

In ähnlicher Weise kann eine elastische Deformation dadurch ausgeglichen werden, dass das Bild in lokale Teilbereiche zerlegt wird, welche dann in iterativer Weise durch Translation aufeinander registriert werden (K.-P. Lin, S.-C. Huang, An elastic mapping algorithm for tomographic images, Proc. 15'th annual intl. conf. of the IEEE (1993), S. 40).

Vor diesem Hintergrund war es Aufgabe der vorliegenden Erfindung, ein Verfahren zur Berechnung der Transformation zwischen zwei Abbildungen eines Objektes bereitzustellen, welches mit verhältnismäßig geringem Rechenaufwand auch bei stärkeren Deformationen eine Transformation hoher Genauigkeit liefert und welches einer geringeren Gefahr unterliegt, in lokalen Optima gefangen zu werden.

Diese Aufgabe wird durch ein Verfahren mit den Merkmalen des Anspruchs 1, ein Computerprogramm mit den Merkmalen des Anspruchs 9 und eine Vorrichtung mit den Merkmalen des Anspruchs 10 gelöst. Vorteilhafte Ausgestaltungen sind in den Unteransprüchen enthalten.

Das Verfahren dient der Berechnung der mathematischen Transformation, welche zwei unterschiedliche Abbildungen eines Objektes ineinander überführt. Bei den Abbildungen kann es sich insbesondere um medizinische Abbildungen handeln, welche zum Beispiel mit einem Röntgen-Computertomographen oder mit einem Kernspin-Magnetresonanz (KMR) Tomographen gewonnen wurden. Unter der Transformation zwischen zwei Abbildungen soll dabei eine Funktion verstanden werden, welche die Punkte der einen Abbildung den Punkten der anderen Abbildungen zuordnet und dabei Nachbarschaftsrelationen der Punkte unverändert lässt. Eine solche Transformation ist demnach eine stetige Funktion, welche synonym auch als Bewegungs- und Deformationsfeld bezeichnet wird, da sie die Bewegung der Punkte der Abbildungen von einer Abbildung zur anderen beziehungsweise die Deformation von Flächen- oder Volumenetementen beschreibt.

Vorzugsweise ist die Funktion objektiv, so dass sie jeden Punkt der einen Abbildung umkehrbar eindeutig einem Punkt der anderen Abbildung zuordnet. Bei dem Verfahren werden zunächst sukzessive die lokalen Transformationsparameter für Teilbereiche der Abbildungen berechnet, und anschließend wird aus diesen lokalen Transformationsparametern die gesamte globale Transformation berechnet. Unter Teilbereichen der Abbildung sind dabei zusammenhängende Flächenstücke oder bei dreidimensionalen Abbildungen Volumenstücke zu verstehen, welche in der Regel im Verhältnis zur Gesamtgröße der Abbildung klein sind und vorzugsweise aus einfachen geometrischen Formen wie Rechtecken oder Kreisen (Quadern oder Kugeln) gebildet sind. Lokale Transformationsparameter sind die Parameter, welche erforderlich sind, um einen Teilbereich aus einer ersten Abbildung in den zugehörigen Teilbereich aus der zweiten Abbildung zu überführen.

Das Verfahren ist dadurch gekennzeichnet, dass die sukzessive Berechnung der lokalen Transformationsparameter für die Teilbereiche in den folgenden Schritten durchgeführt wird:
a) Für mindestens einen ersten Teilbereich werden Schätzwerte für die lokalen Transformationsparameter vorgegeben oder berechnet. Dieser Teilbereich oder diese Teilbereiche dienen als Ausgangspunkt für den nachfolgenden Algorithmus, und es ist vorteilhaft, wenn die Schätzwerte möglichst nahe an den "wahren" Transformationsparametern liegen.. Vorzugsweise werden daher die Schätzwerte für die ersten Teilbereiche mit entsprechendem Aufwand genau berechnet, oder es werden solche Teilbereiche ausgewählt, für die die Transformation mit hoher Genauigkeit bekannt ist. Ausgehend von den Schätzwerten werden lokale Transformationsparameter des Teilbereiches oder der Teilbereiche berechnet.
b) Es wird ein Teilbereich erzeugt oder aus einer vorgegebenen Menge von Teilbereichen ausgewählt, für den noch keine lokalen Transformationsparameter berechnet wurden und der vorzugsweise einem bereits erfolgreich registrierten Teilbereich am nächsten liegt, wobei der Registrierungserfolg z.B. durch das im Rahmen der Optimierung gefundene Ähnlichkeitsmaß quantifeziert werden kann. Alternativ können auch mehrere solcher Teilbereiche erzeugt beziehungsweise ausgewählt werden.
c) Für jeden in Schritt c) erzeugten oder ausgewählten Teilbereich werden die zugehörigen lokalen Transformationsparameter berechnet, wobei die lokalen Transformationsparameter von bereits erfolgreich registrierten Teilbereichen, welche dem aktuell untersuchten Teilbereich benachbart sind, als Startwert verwendet werden. Das heißt, dass der zu berechnende Teilbereich zunächst mit den lokalen Transformationsparametern der benachbarten Teilbereiche transformiert wird, und dass dann die so initialisierte Transformation dieses Teilbereiches durch weitere Berechnungen optimiert wird.
d) Die Schritte b) und c) werden so oft wiederholt, bis für eine ausreichende Verteilung von Teilbereichen die lokalen Transformationsparameter berechnet sind. Die Verteilung der Teilbereiche beschreibt, wie die Teilbereiche über die Fläche der Abbildungen verteilt sind. In der Regel wird anzustreben sein, dass der Abstand zwischen einem beliebigen Punkt einer Abbildung und dem hierzu nächstgelegenen Teilbereich ein vorgegebenes Maximum nicht überschreitet, wobei in besonders interessierenden Bereichen der Abbildungen beziehungsweise besonders stark bewegten Teilen der Abbildungen eine höhere Dichte an Teilbereichen sinnvoll sein kann.

Bei dem erfindungsgemäßen Verfahren werden somit die lokalen Transformationsparameter von Teilbereichen der Abbildung propagierend von einem oder wenigen ersten Teilbereichen aus berechnet. Als Startwert für die Transformationsparameter von in einem Zyklus des Verfahrens zu registrierenden Teilbereichen werden dabei die bereits bestimmten lokalen Transformationsparameter der benachbarten Teilbereiche verwendet. Somit wird in jedem Zyklus des Verfahrens die in den vorangegangenen Zyklen gewonnene Information genutzt und weitergegeben. Das durch die Startwerte vorgegebene Genauigkeitsniveau der lokalen Transformationsparameter kann sich so über die Zyklen des Verfahrens an die nachfolgend berechneten Teilbereiche übertragen und dabei sogar steigen, so dass abschließend eine Menge von mit hoher Genauigkeit berechneten Teilbereichen erhalten wird.

Vorzugsweise werden die bei dem Verfahren zugrunde gelegten Teilbereiche hinreichend klein gewählt, so dass die lokalen Transformationsparameter bei Einhaltung einer vorgegebenen Genauigkeit der erzielten Transformation für alle Punkte des Teilbereiches als konstant angenommen werden können. Das heißt, dass die Teilbereiche durch eine starre Transformation ineinander überführt werden können, welche sich durch sechs Freiheitsgrade beschreiben lässt. Drei dieser Freiheitsgrade betreffen die dreidimensionale Verschiebung des Schwerpunktes oder eines anderen ausgewählten Punktes des Teilbereiches, und die restlichen drei Freiheitsgrade eine räumliche Drehung des Teilbereiches um diesen Punkt. Deformationen, das heißt ortsabhängige Dehnungen oder Stauchungen des Teilbereiches, können bei entsprechender Kleinheit des Teilbereiches ohne gravierenden Verlust an Genauigkeit außer Acht gelassen werden. Hierdurch kann die Berechnung der lokalen Transformationsparameter eines Teilbereiches beschleunigt und stabilisiert werden.

Vorteilhafterweise werden bei dem Verfahren nur solche Teilbereiche verwendet, welche eine ausreichend starke, möglichst eindeutige Strukturierung aufweisen. Eine Strukturierung ist erforderlich, um einen Teilbereich in einer ersten Abbildung möglichst eindeutig dem zugehörigen Teilbereich in der zweiten Abbildung zuordnen zu können. Für die Quantifizierung der Strukturierung gibt es verschiedene Möglichkeiten. Insbesondere kann hierfür die Varianz der Bildwerte (Graustufen, Farbunterschiede etc.) im Teilbereich als Maß zugrunde gelegt werden.

Weiterhin hat es sich für die Genauigkeit des Verfahrens als vorteilhaft erwiesen, wenn die verwendeten Teilbereiche zumindest teilweise überlappend gewählt werden. Hierdurch wird gerade für große Deformationen die Stabilität des Verfahrens erhöht.

Die verwendeten Teilbereiche können gemäß einer Ausführungsform des Verfahrens mit einer geeigneten Verteilung in einer der Abbildungen vorab festgelegt werden. Im Teilschritt b) des Verfahrens wird dann jeweils aus den vorgegebenen Teilbereichen ein Teilbereich (oder mehrere Teilbereiche) ausgewählt, für welchen als nächstes die lokalen Transformationsparameter berechnet werden sollen. Die vorab erfolgende Bestimmung der Verteilung der Teilbereiche kann insbesondere automatisch erfolgen, wobei als Kriterien eine vorgegebene Verteilungsdichte (Anzahl an Teilbereichen pro Flächeneinheit) und eine vorgegebene minimale Strukturierung verwendet werden können.

Bei Vorgabe einer Verteilung von Teilbereichen ist der in Schritt b) des Verfahrens ausgewählte Teilbereich vorzugsweise derjenige, welcher unter allen noch nicht behandelten Teilbereichen die kürzesten Entfernung zu den bereits erfolgreich registrierten Teilbereichen aufweist. Genaugenommen werden alle noch nicht behandelten Teilbereiche mit einer Funktion gewichtet. In diese Funktion fließt für jeden dem zu gewichtenden Teilbereich benachbarten Teilbereich das bei der Registrierung erzielte Ähnlichkeitsmaß und/oder der Abstand zwischen dem Mittelpunkt des bereits registrierten Teilbereichs und des zu gewichtenden Teilbereichs ein. Durch das zweite Auswahlkriterium wird sichergestellt, dass sich die bereits gewonnenen Berechnungsergebnisse lokal, das heißt über ihre Nachbarschaft ausbreiten. Eine solche lokale Ausbreitung ist sinnvoll, da sich die lokalen Transformationsparameter stetig ändern und somit die bereits berechneten lokalen Transformationsparameter eines Teilbereiches A eine um so bessere Näherung für die lokalen Transformationsparameter eines anderen Teilbereiches B darstellen, je näher dieser andere Teilbereich B am ersten Teilbereich A liegt und gegebenenfalls je größer die Genauigkeit der für Teilbereich A bestimmten Transformationsparameter ist.

Für die Quantifizierung der Entfernung eines Teilbereiches A von der Menge der bereits registrierten Teilbereichen sind verschiedene Möglichkeiten denkbar. So kann diese Entfernung im einfachsten Falle gleich derjenigen Entfernung gesetzt werden, die der betrachtete Teilbereich A von dem ihm am nächsten gelegenen bereits erfolgreich registrierten Teilbereich hat. Ebenso ist es jedoch auch denkbar, dass der Entfernungswert als der Mittelwert (oder eine in sonstiger Weise berechnete Funktion) aller paarweisen Entfernungen zwischen dem betrachteten Teilbereich A und den bereits berechneten Teilbereichen definiert wird. Wichtig ist in jedem Falle, dass ein neu zu berechnender Teilbereich A nahe an bereits erfolgreich registrierten Teilbereichen gewählt wird.

Das erläuterte Entfernungsprinzip wird vorzugsweise auch dann angewendet, wenn im Teilschritt b) des Verfahrens nicht von vorgegebenen Teilbereichen ausgegangen wird, sondern wenn dort jeweils ein neuer Teilbereich für die weitere Berechnung erzeugt wird.

Dieser neue Teilbereich sollte dann in hinreichender Nähe zu den bereits mit hoher Genauigkeit registrierten Teilbereichen erzeugt werden, damit sich die bereits bekannten lokalen Transformationsparameter mit hoher Genauigkeit auf den neuen Teilbereich fortpflanzen.

Gemäß einer Weiterbildung des Verfahrens werden die in Schritt c) für einen Teilbereich berechneten lokalen Transformationsparameter nur dann weiter verwendet, wenn ihre Genauigkeit über einem vorgegebenen Schwellwert liegt. Sollte daher der Fall auftreten, dass sich ein Teilbereich nicht mit der gewünschten Mindestgenauigkeit einem Teilbereich der zweiten Abbildung zuordnen lässt, so wird dieser Teilbereich bei der weiteren Ausführung des Verfahrens nicht berücksichtigt. Auf diese Weise können Fehler durch ungeeignete Teilbereiche vermieden werden. Ungeeignete Teilbereiche können zum Beispiel dadurch entstehen, dass Strukturen nur in einer der Abbildungen zu sehen sind, während sie in der anderen Abbildung nicht sichtbar sind.

Als Maß für die Genauigkeit der lokalen Transformationsparameter bietet sich insbesondere die Korrelation oder lokale Korrelation zwischen dem Teilbereich in der ersten Abbildung und dem vermöge der lokalen Transformationsparameter zugeordneten Teilbereich in der zweiten Abbildung an. Idealerweise ist der Inhalt der beiden Teilbereiche (Quelle und Ziel) identisch, was zu einem Korrelationswert von 1.0 führt. Typischerweise wird der Schwellwert, oberhalb dessen noch von einer ausreichenden Genauigkeit der lokalen Transformationsparameter ausgegangen wird, bei einem Korrelationswert von etwa 0.6 angenommen.

In Schritt c) des erfindungsgemäßen Verfahrens wird der Startwert der lokalen Transformationsparameter vorzugsweise als ein gewichteter Mittelwert aus bereits berechneten lokalen Transformationsparametern bestimmt. Dabei werden die zu diesem Mittelwert beitragenden Sätze von lokalen Transformationsparametern einerseits mit der Entfernung gewichtet, die der zu den Transformationsparametern gehörige Teilbereich von dem zu berechnenden Teilbereich aufweist, andererseits fließt vorzugsweise auch die Genauigkeit der Transformationsparameter ein, die in vorangegangenen Registrierungsschritccn bestimmt worden sind. Eine solche Bestimmung des Startwertes der lokalen Transformationsparameter berücksichtigt die Stetigkeit der Änderung der lokalen Transformationsparameter dadurch, dass bereits mit hinreichender Genauigkeit berechnete lokale Transformationsparameter um so größeren Einfluss auf den Startwert in einem neu zu berechnenden Teilbereich gewinnen, je näher der zugehörige Teilbereich an dem zu berechnenden Teilbereich liegt. Die abstandsabhängige Komponente der Gewichtungsfunktion kann zum Beispiel durch eine glockenförmige Kurve mit dem zu berechnenden Teilbereich im Zentrum gebildet werden.

Gemäß einer anderen Weiterbildung des Verfahrens wird in Abbildungsgebieten, in denen eine geringe Genauigkeit der berechneten lokalen Transformationsparameter der Teilbereiche vorliegt, die Verteilungsdichte von zu berechnenden Teilbereichen erhöht. Das heißt, dass in solchen Problemzonen eine größere Anzahl von Teilbereichen berechnet wird, um eine ausreichende Zuverlässigkeit der Transformation zu erzielen.

Des weiteren können zur Erhöhung der Genauigkeit des erfindungsgemäßen Verfahrens die Schritte a) bis d) in mehreren Iterationen so oft wiederholt werden, bis eine vorgegebene Genauigkeit der Transformation erzielt ist. Das heißt, dass jeder Iterationszyklus aus der Berechnung aller Teilbereiche besteht, und dass diese Berechnung aller Teilbereiche mehrfach wiederholt wird, bis ein zufriedenstellendes Ergebnis vorliegt. Dabei wird bei einem neuen Iterationszyklus als in Schritt a) verwendeter erster Teilbereich derjenige Teilbereich ausgewählt, welcher in dem vorangegangenen Iterationszyklus die höchste Genauigkeit der lokalen Transformationsparameter erzielt hat. Die höchste erreichte Genauigkeit des vorangegangenen Iterationszyklus legt somit den Ausgangspunkt für den nächsten Iterationszyklus fest, so dass Letzterer erwartungsgemäß eine noch höhere Genauigkeit für alle Teilbereiche erzielen sollte.

Die mit dem erfindungsgemäßen Verfahren berechnete mathematische Transformation wird insbesondere durch ein stetiges, vorzugsweise stetig differenzierbares Vektorfeld y = f(r) beschrieben, dessen Vektoren y korrespondierende Punkte r, r' der beiden Abbildungen gemäß der Formel r' = r + f(r) verbinden.

Das Verfahren lässt sich insbesondere bei der medizinischen Bildbcarbeitung einsetzen. Dabei wird vorzugsweise der mindestens eine erste Teilbereich aus Schritt a) des Verfahrens im Bereich der Darstellung eines Knochens gewählt, zum Beispiel im Bereich der Wirbelsäule. Da ein Knochen keiner Deformation unterliegt, ist zu erwarten, dass sich eine durch Knochen definierte Struktur zwischen den beiden Abbildungen nur durch Translation und Rotation verändert hat. Die vereinfachte starre Registrierung eines ersten Teilbereiches lässt sich somit in einen solchen Bereich erwartungsgemäß mit guter Genauigkeit ausführen. Für Bilder, die keine Knochen enthalten, ist es vorteilhaft, anatomische Landmarken (z.B. Verzweigungen von Gefäßen) als Zentrum des ersten Teilbereichs zu wählen.

Die Erfindung betrifft ferner eine Computerprogramm zur Berechnung der Transformation, welche zwei digitalisierte Abbildungen eines Objektes, vorzugsweise zwei durch Computertomographie oder Kernspintomographie erhaltene medizinische Abbildungen, ineinander überführt. Das Computerprogramm ist dadurch gekennzeichnet, dass es eine Berechnung nach einem der oben erläuterten Verfahren durchführt.

Ferner betrifft die Erfindung einen Datenträger für ein Computerprogramm, auf welchem ein Computerprogramm der genannten Art abgespeichert ist. Bei dem Datenträger kann es sich insbesondere um einen magnetischen Datenträger (Diskette, Magnetband, Festplatte), einen optischen Datenträger (CD), einen Halbleiterspeicher (RAM, ROM, ...) oder dergleichen handeln. Insbesondere kann der Datenträger Teil eines Computers sein, auf welchem das auf dem Datenträger gespeicherte Computerprogramm ausgeführt wird.

Schließlich betrifft die Erfindung auch eine Vorrichtung zur Berechnung der Transformation, welche zwei vorzugsweise durch Computertomographie oder Kernspintomographie erhaltene digitalisierte Abbildungen eines Objektes ineinander überführt. Die Vorrichtung enthält einen Zentralprozessor sowie mindestens einen Speicher, mit dem der Zentralprozessor verbunden ist und auf den er Zugriff zum Lesen und Schreiben von Daten und Steuerbefehlen hat. In dem Speicher können insbesondere die zu transformierenden Abbildungen sowie ein auf dem Zentralprozessor ausführbares Computerprogramm gespeichert sein. Bei dem Speicher kann es sich um einen magnetischen Datenträger (Diskette, Magnetband, Festplatte), einen optischen Datenträger (CD), einen Halbleiterspeicher (RAM, ROM, ...) oder dergleichen handeln. Das im Speicher abgelegte und den Zentralprozessor steuernde Computerprogramm ist so eingerichtet, dass die Berechnung der Transformation auf dem Zentralprozessor durch ein Verfahren der oben erläuterten Art erfolgt. Dabei wird vom Zentralprozessor die sukzessive Berechnung der lokalen Transformationsparameter für die Teilbereiche in den oben erläuterten Schritten a) bis d) durchgeführt. Auch die oben erläuterten Weiterbildungen des Verfahrens können in dem genannten Computerprogramm implementiert sein.

Im Folgenden wird die Erfindung mit Hilfe der Figuren beispielhaft erläutert. Es zeigen:
Fig. 1 zwei Abbildungen 10, 10', welche durch eine Transformation einander zugeordnet werden sollen, während vier Zyklen (i) - (iv) des erfindungsgemäßen Verfahrens zur Berechnung der lokalen Transformationsparameter von Teilbereichen der Abbildungen;
Fig. 2 für zwei Abbildungspaare von 3D MR Abbildungen der Halswirbelsäule die sich ausbreitende Berechnung von Teilbereichen;
Fig. 3 zwei 3D MR Abbildungen der Halswirbelsäule mit darin eingetragenen und einander zugeordneten Teilbereichen.

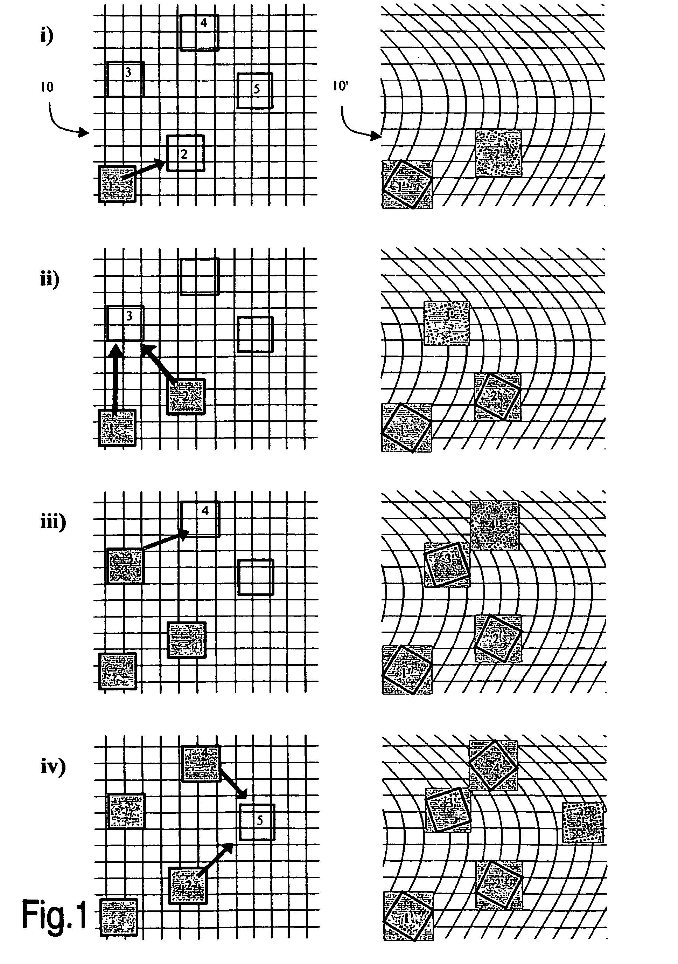

   In Figur 1 wird das erfindungsgemäße Verfahren schematisch veranschaulicht. Bei dem Verfahren geht es darum, die Transformation zwischen zwei Abbildungen 10, 10' zu berechnen, welche korrespondierende Punkte der Abbildungen einander zuordnet. Die Abbildungen sollen dabei von demselben Objekt aufgenommen sein, welches sich jedoch zwischen der Aufnahme der beiden Abbildungen bewegt oder deformiert haben kann. In dem Schema von Figur 1 wird dies durch eine stetige Deformation eines rechtwinkligen Gitters symbolisiert.

In der ersten Zeile (i) von Figur 1 sind die erste Abbildung 10 und die zweite Abbildung 10' nebeneinander dargestellt, wobei in der ersten Abbildung 10 fünf rechteckige kleine Teilbereiche 1, 2, 3, 4, 5 eingetragen sind, die unregelmäßig aber mit in etwa konstanter Flächendichte über die Abbildung 10 verteilt sind. Bei dem Verfahren werden zunächst die lokalen Transformationsparameter dieser Teilbereiche berechnet, aus denen sich dann in einem zweiten Schritt die globale Transformation für die gesamte Abbildung 10 bestimmen lässt.

Die Teilbereiche sollten hinreichend klein gewählt werden, so dass ihre Deformation in der zweiten Abbildung 10' vernachlässigt werden kann. Die lokalen Transformationsparameter eines Teilbereiches 1 lassen sich daher durch eine starre Transformation mit drei Zahlenwerten (Verschiebung in horizontaler und vertikaler xy-Richtung sowie einen Drehwinkel) beziehungsweise im dreidimensionalen Fall mit sechs Zahlenwerten (Translationsvektor und Rotationsvektor) beschreiben. Die Vernachlässigung der Deformation drückt sich in Figur 1 grafisch dadurch aus, dass die in der zweiten Abbildungen 10' eingetragenen Teilbereiche 1', 2', 3', 4', 5' rechteckig sind, während sie bei elastischer Anpassung Trapeze mit gekrümmten Seiten sein müssten.

Das erfindungsgemäße Verfahren beginnt damit, dass für einen ausgewählten ersten Teilbereich 1 Startwerte für die lokalen Transformationsparameter, die ihn in den Teilbereich 1' in der zweiten Abbildung 10' überführen, berechnet oder vorgegeben werden. Bei der Berechnung der Startwerte sollte entsprechend großer Aufwand betrieben werden, um den Erfolg des Optimierungsverfahrens und somit eine möglichst hohe Genauigkeit des Resultates sicherzustellen. Vorzugsweise wird der als Ausgangspunkt dienende erste Teilbereich 1 so gewählt, dass sich die zugehörige lokale Transformation möglichst einfach beziehungsweise mit hoher Genauigkeit schätzen lässt.

Wie in Figur 1 (i) durch einen Pfeil angedeutet wird, werden nach der von den Startwerten ausgehenden Bestimmung der lokalen Transformationsparameter für den Teilbereich 1 als nächstes die lokalen Transformationsparameter desjenigen Teilbereiches 2 berechnet, welcher dem bereits berechneten Teilbereich 1 am nächsten liegt. Dabei werden als Startwert für die lokalen Transformationsparameter des Teilbereiches 2 die lokalen Transformationspatameter des bereits registrierten Teilbereiches 1 zugrunde gelegt. Aufgrund der Nähe der beiden Teilbereiche 1 und 2 und der stetigen Änderung der lokalen Transformationsparameter ist davon auszugehen, dass der gewählte Startwert eine gute Näherung darstellt und dass die anschließende genauere Berechnung der lokalen Transformationsparameter des Teilbereiches 2 somit schnell und mit großer Genauigkeit zu einem Ergebnis führt.

In Figur 1 (ii) ist der nächste Schritt des Verfahrens dargestellt. Dabei ist in der zweiten Abbildung 10' der wie zuvor erläutert berechnete Teilbereich 2' eingezeichnet. Gleichzeitig ist wiederum in der ersten Abbildung 10 durch Pfeile angedeutet, dass als nächstes die lokalen Transformationsparameter eines Teilbereiches 3 berechnet werden sollen, welcher von allen noch nicht berechneten Teilbereichen den bereits erfolgreich registrierten Teilbereichen 1 und 2 am nächsten liegt. Als Startwert für die lokalen Transformationsparameter des Teilbereiches 3 werden dabei die bereits berechneten lokalen Transformationsparameter der Teilbereiche 1 und 2 zugrunde gelegt, wobei diese vorzugsweise mit der Entfernung gewichtet werden, die die Teilbereiche 1 und 2 vom bearbeiteten Teilbereich 3 haben. Das heißt, dass der näher gelegene Teilbereich 2 seine lokalen Transformationsparameter mit höherem Gewicht einbringt als der entfernter gelegene Teilbereich 1. Der Grund hierfür ist die stetige Änderung der lokalen Transformationsparameter. In die Gewichtung geht außerdem die Genauigkeit der für die Teilbereiche 1 und 2 bestimmten Transformationsparameter ein, so dass der Teilbereich, für den die Parameter mit höherer Genauigkeit bestimmt werden konnten, verhältnismäßig mehr beiträgt.

Im rechten Teil von Figur 1 (iii) ist als Ergebnis der Teilbereich 3' in der zweiten Abbildung 10' eingetragen, welcher aufgrund der zuvor berechneten lokalen Transformationsparameter dem Teilbereich 3 der ersten Abbildung 10 zugeordnet wird. Gleichzeitig ist im linken Teil von Figur 1(iii) durch Pfeile der weitere Fortgang des Verfahrens angedeutet. Ausgehend von den bereits berechneten Teilbereichen 1, 2 und 3 werden als nächstes die lokalen Transformationsparameter des Teilbereiches 4 berechnet, welcher den bereits berechneten Teilbereichen 1, 2 und 3 am nächsten liegt. Alternativ zur Berechnung des Teilbereiches 4 könnte auch der Teilbereich 5 behandelt werden, welcher in einem vorgegebenen Entfernungsintervall zu den bereits berechneten Teilbereichen liegt. Bei ähnlichen Entfernungen zwischen den Teilbereichen 3 und 4 bzw. 2 und 5 fällt die Entscheidung, welcher Teilbereich als nächstes behandelt werden soll, auf Basis der für die lokalen Transformationsparameter der Teilbereiche 2 und 3 erzielten Genauigkeit. Im vorliegenden Beispiel sei der Registrierungserfolg für Teilbereich 3 größer als für Teilbereich 2, so dass Teilbereich 4 aufgrund seiner Nachbarschaft zu Teilbereich 3 als nächstes behandelt wird.

In Figur 1(iv) ist der letzte Schritt zum Zwischenergebnis des Verfahrens dargestellt, nach dem allen vorgegebenen Teilbereichen 1, 2, 3, 4, 5 der ersten Abbildung 10 die transformierten Teilbereiche 1', 2', 3', 4', 5' der zweiten Abbildung 10' zugeordnet sind. Wie durch die Pfeile in Figur 1(iv) angedeutet wird, gehen bei der Bestimmung der Ausgangswerte der lokalen Transformationsparameter des Teilbereiches 5 die lokalen Transformationsparameter der Teilbereiche 2 und 4 ein.

Sofern sich bei der Durchführung des Verfahrens herausstellt, dass für einen Teilbereich die lokalen Transformationsparameter nicht mit einer gewünschten Genauigkeit berechnet werden können, wird dieser Teilbereich vorzugsweise aus der weiteren Bearbeitung ausgeschlossen.

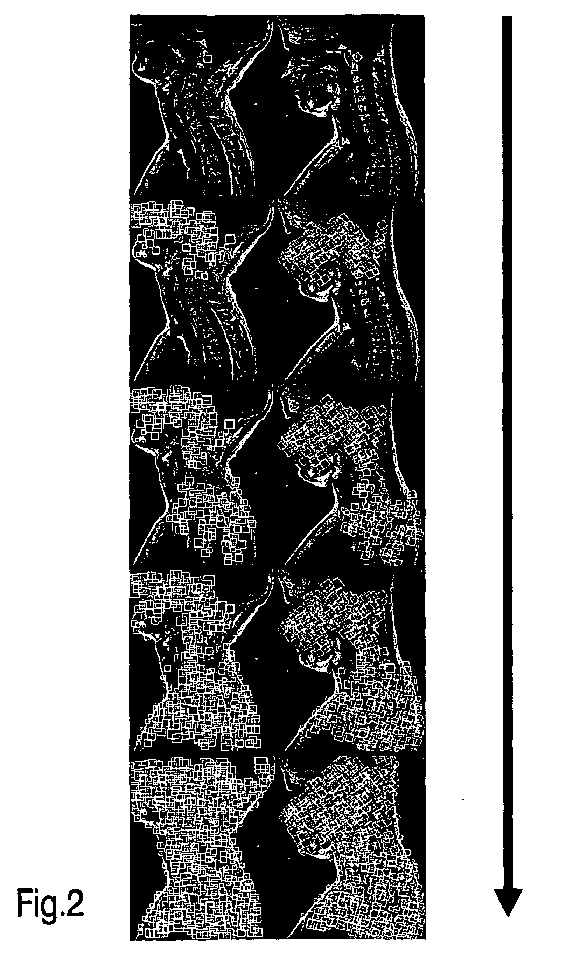

Figur 2 zeigt drei Stufen der Ausbreitung von berechneten Teilbereichen in 3D MR Abbildungen des Kopf-Halsbereiches eines Menschen. Die drei Bilder der linken Spalte betreffen dabei ein erstes Beispiel und die drei Bilder der rechten Seite ein zweites Beispiel von Abbildungspaaren. Bilder von aufeinanderfolgenden Schritten des Verfahrens sind untereinander angeordnet. Wie von Little et al. vorgeschlagen (J.A Little, D.L.G. Hill, D.J. Hawkes, Deformations Incorporating Rigid Structures, Computer Vision and Image Understanding 66 (1997), S. 223), wurde dabei zunächst eine starre Zuordnung von Wirbelkörpern vor der elastischen Zuordnung ausgeführt. Die Parameter des Wirbels C1 wurden dann verwendet, um die Startwerte der lokalen Transformationsparameter für Teilbereiche in der Nähe der Wirbelsäule zu initialisieren. Teilbereiche sind in den MR-Bildern durch kleine Quadrate angedeutet. Diese Quadrate sind in der jeweils linken Abbildung mit ihren Seiten vertikal beziehungsweise horizontal ausgerichtet, während sie in der jeweils rechten Abbildung aufgrund der Bewegung beziehungsweise Deformation des Objektes verschoben und rotiert dargestellt sind. Da in erster Näherung eine starre Registrierung der Teilbereiche vorgenommen wird, ist die Größe einander entsprechender Teilbereiche in der linken und rechten Abbildung jeweils unverändert.

In aufeinanderfolgenden Schritten des Verfahrens werden weiter entfernt von Cl gelegene Teilbereiche zugeordnet, bis alle Teilbereiche einer gewünschten Verteilung zugeordnet (registriert) sind. Je größer die elastische Deformation in den Abbildungen ist, desto größer sind die lokalen Variationen der Transformationsparameter. Experimente haben gezeigt, dass die Wahl überlappender Teilbereiche (Teilvolumina) die Stabilität des Verfahrens für große Deformationen erhöhen kann. Wenn die Deformationen kleiner als in den in Figur 2 gezeigten Beispielen sind, ist auch eine kleinere Anzahl von Teilbereichen zur Erzielung einer vergleichbaren Genauigkeit ausreichend.

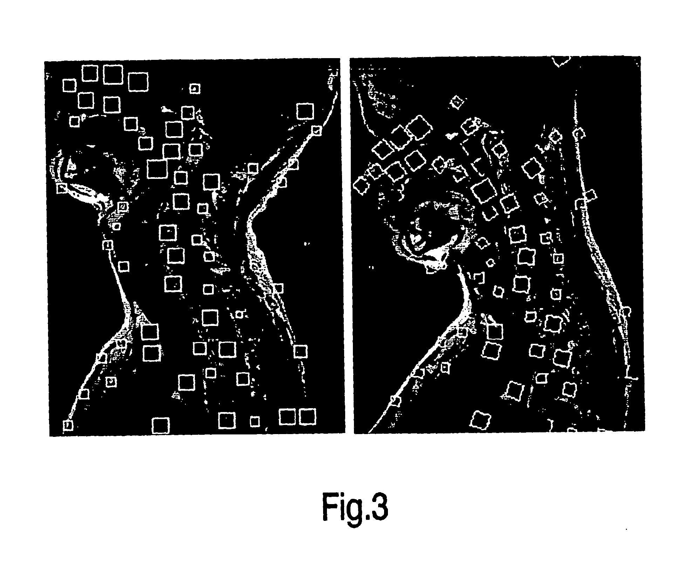

Obwohl die herkömmliche Kreuzkorrelation für Anwendungen einer einzigen Modalität verwendet werden kann, hat sich das lokale Korrelationsähnlichkeitsmaß (J. Weese, P. Rösch, T. Netsch, T. Blaffert, M. Quist, Gray-Value Based Registration of CT and MR Images by Maximization of Local Correlation, Springer Lecture Notes on Computer Science 1679 (1999) 656) als besonders geeignet für die Registrierung kleiner Volumina erwiesen. Die in den Figuren 2 und 3 dargestellten Ergebnisse sind mit Hilfe eines Algorithmus zur automatischen Teilbereichsauswahl basierend auf lokaler Varianz erhalten worden. Selbst mit einem einfachen Gradienten-Optimierungsverfahren betrug die durchschnittliche Zeit für die Registrierung eines Teilbereiches nur etwa eine halbe Sekunde (Computer: Sun Ultra Sparc, 400 MHz). Die Leistungsfähigkeit des Algorithmus kann durch für diese Anwendung angepasste Optimierungsverfahren noch erheblich erhöht werden.

Die lokale Korrelation bietet auch eine Möglichkeit, die Teilbereiche mit Bezug auf sowohl die Qualität des Teilbereiches selbst (durch seinen lokalen Varianzinhalt) als auch den Erfolg des Registrierungsverfahrens zu klassifizieren (durch den Wert des mittleren lokalen Korrelationskoeffizienten nach der Registrierung).

Figur 3 zeigt zwei 3D MR Bilder des Kopf-Halsbereiches mit starker elastischer Deformation. Teilbereiche (die in diesem Falle Volumina sind) sind in der linken Abbildung ausgewählt worden, und die zugehörigen Teilbereiche in der rechten Abbildung wurden mit dem erfindungsgemäßen Verfahren bestimmt. Die gezeigten Teilbereiche sind entsprechend der Genauigkeit der Registrierung ausgewählt, wobei der mittlere lokale Korrelationskoeffizient größer als 0.6 ist. Aufgrund einer axialen Rotation des Kopfes sind nicht alle Teilbereiche der linken Abbildung in der rechten Abbildung sichtbar. Nur ein Teil der für die Registrierung verwendeten Teilbereiche ist dargestellt. Wie aus Figur 3 erkennbar ist, hat sich teilweise die Größe einander entsprechender Teilbereiche nicht verändert, da die Registrierung gemäß einer starren Transformation berechnet ist.

Verglichen mit den Algorithmen nach dem Stand der Technik zur Berechnung einer Bewegungstransformation hat das Verfahren der vorliegenden Erfindung die folgenden Vorteile:
1. Es ist keine aufwendige Vorverarbeitung erforderlich zur Extraktion von Merkmalen wie z.B. Gradinien.
2. Der Algorithmus ist in Bezug auf lokale Optima robuster als übliche Optimierungsansätze.
3. Bei Vorliegen großer Deformationen müssen Startwerte nur für einen kleinen Teil des Bildes bereitgestellt werden, und der Algorithmus erkennt die Startwerte für den restlichen Teil des Bildes durch die Propagierung von Teilbereichen.
4. Es wird ein quantitatives lokales Maß für den Erfolg des Registrierungsprozesses erhalten. Bereiche des Bildes mit einer geringen Registrierungsgenauigkeit können damit automatisch festgestellt werden. Dies ist wesentlich für die Implementation eines Algorithmus, welcher iterativ die Genauigkeit des Ergebnisses verbessert.
5. Der zu durchsuchende Parameterraum für die Teilbereichsregistrierung wird aufgrund der geringen Variabilität der Transformationsparameter zwischen benachbarten Teilbereichen erheblich reduziert.
6. Das Funktionieren des Verfahrens bei Vorliegen großer Deformationen konnte für mehrere Beispiele gezeigt werden.

Verschiedene Abwandlungen und Erweiterungen des beispielhaft dargestellten Algorithmus sind denkbar. So kann in einem iterativen Ansatz die geschätzte lokale Verteilung der Registrierungsgenauigkeit verwendet werden, um diejenigen Bildbereiche zu identifizieren, in denen das Verfahren genaue Registrierungsergebnisse geliefert hat.

Ausgehend von diesen Bereichen können Teilbereiche in die übrigen Teile des Bildes propagiert werden, um so die gesamte Genauigkeit des Deformationsfeldes zu verbessern. Dieses Vorgehen kann wiederholt werden, bis die gewünschte Genauigkeit für das gesamte Volumen erreicht ist.

Ferner kann der Algorithmus auf eine Multiskalenrepräsentation hoch aufgelöster Bilder (zum Beispiel Cone-Beam CT) angewendet werden, um die Deformationen in Bezug auf ihre Örtlichkeit zu klassi6zieren und die Berechnungszeit zu vermindern. Bei der Multiskalenrepräsentation werden mehrere Auflösungen eines Bildes - im Allgemeinen durch Glättung - erzeugt. Bei dem Verfahren würde man auf einer groben Auflösung lokale Transformationsparameter bestimmen und dieses Ergebnis auf zunehmend höheren Auflösungen immer weiter verfeinern. Da interaktive Anwendungen besonders zeitkritisch sind, könnte in solchen Fällen ein interessierender Bereich über eine Benutzerschnittstelle spezifiziert werden. Das erfindungsgemäße Verfahren könnte dann begrenzt auf den interessierenden Bereich, z.B. auf bestimmte Gefäße, angewendet werden.

## Patentansprüche

1. Verfahren zur Berechnung der Transformation, welche zwei vorzugsweise durch Computertomographie oder Kernspintomographie erhaltene Abbildungen (10, 10') eines Objektes ineinander überführt, wobei zunächst sukzessive die lokalen Transformationsparameter für Teilbereiche (1, 2, 3, 4, 5) der Abbildungen berechnet werden und wobei anschließend hieraus die gesamte Transformation berechnet wird,
**dadurch gekennzeichnet,**
**dass** die sukzessive Berechnung der lokalen Transformationsparameter für die Teilbereiche wie folgt durchgeführt wird:
a) für mindestens einen ersten Teilbereich (1) werden die lokalen Transformationsparameter vorgegeben oder berechnet;
b) es wird mindestens ein noch nicht berechneter Teilbereich (2) erzeugt oder aus einer Menge vorgegebener Teilbereiche (2, 3, 4, 5) ausgewählt;
c) für jeden Teilbereich (2) aus Schritt b) werden die lokalen Transformationsparameter berechnet, wobei die lokalen Transformationsparameter von mindestens einem bereits erfolgreich behandelten benachbarten Teilbereich (1) als Startwert verwendet werden;
d) die Schritte b) und c) werden so oft wiederholt, bis für eine ausreichende Verteilung von Teilbereichen die lokalen Transformationsparameter berechnet sind.

2. Verfahren nach Anspruch 1,
**dadurch gekennzeichnet,**
**dass** die Teilbereiche (1, 2, 3, 4, 5) hinreichend klein gewählt werden, so dass die lokalen Transformationsparameter unter Einhaltung einer vorgegebenen Genauigkeit für alle Punkte des Teilbereiches als konstant angenommen werden können.

3. Verfahren nach Anspruch 1 oder 2,
**dadurch gekennzeichnet,**
**dass** nur solche Teilbereiche (1, 2, 3, 4, 5) verwendet werden, welche eine ausreichend starke Strukturierung enthalten.

4. Verfahren nach mindestens einem der Ansprüche 1 bis 3,
**dadurch gekennzeichnet,**
**dass** die Teilbereiche zumindest teilweise überlappend gewählt werden.

5. Verfahren nach mindestens einem der Ansprüche 1 bis 4,
**dadurch gekennzeichnet,**
**dass** vor Schritt a) eine geeignete Verteilung von Teilbereichen (1, 2, 3, 4, 5) in einer der Abbildungen (10) bestimmt wird, und dass in Schritt b) mindestens ein noch nicht berechneter Teilbereich (2) aus dieser Verteilung ausgewählt wird.

6. Verfahren nach Anspruch 5,
**dadurch gekennzeichnet,**
**dass** der in Schritt b) ausgewählte Teilbereich (2) derjenige Teilbereich ist, welcher von allen noch nicht berechneten Teilbereichen (2, 3, 4, 5) den höchsten Gewichtungsfaktor aufweist, wobei eine kleine Entfernung zu einem bereits registrierten Teilbereich und/oder eine hohe Genauigkeit der für den bereits registrierten Teilbereich bestimmten Transformationsparameter zu einer hohen Gewichtung führt.

7. Verfahren nach mindestens einem der Ansprüche 1 bis 6,
**dadurch gekennzeichnet,**
**dass** die für einen Teilbereich (2) berechneten lokalen Transformationsparameter nur dann weiter verwendet werden, wenn ihre Genauigkeit über einem vorgegebenen Schwellwert liegt.

8. Verfahren nach mindestens einem der Ansprüche 1 bis 7,
**dadurch gekennzeichnet.**
**dass** in Schritt c) der Startwert der lokalen Transformationsparameter als ein mit der Entfernung der zugehörigen Teilbereiche (1) und/oder deren Registrierungsgenauigkeit gewichteter Mittelwert der bereits berechneten lokalen Transformationsparameter bestimmt wird.

9. Computerprogramm zur Berechnung der Transformation, welche zwei digitalisierte, vorzugsweise durch Computertomographie oder Kernspintomographie erhaltene Abbildungen (10, 10') eines Objektes ineinander überführt,
**dadurch gekennzeichnet**
**dass** die Berechnung durch ein Verfahren nach einem der Ansprüche 1 bis 8 erfolgt.

10. Vorrichtung zur Berechnung der Transformation, welche zwei vorzugsweise durch Computertomographie oder Kernspintomographie erhaltene digitalisierte
Abbildungen (10, 10') eines Objektes ineinander überführt, enthaltend einen Zentralprozessor, welcher mit mindestens einem Speicher für die Abbildungen sowie für ein auf dem Zentralprozessor ausführbares Computerprogramm verbunden ist, wobei das Computerprogramm so eingerichtet ist, dass die Berechnung der Transformation durch ein Verfahren nach einem der Ansprüche 1 bis 9 erfolgt.

## Claims

1. A method of computing the transformation which transforms two images (10, 10') of an object, preferably acquired by means of computed tomography or magnetic resonance tomography into each other, first the local transformation parameters being successively calculated for sub-regions (1, 2, 3, 4, 5) of the images and subsequently the overall transformation being calculated from them, **characterized in that** the successive computation of the local transformation parameters for the sub-regions is performed as follows:
a) the local transformation parameters are predetermined or calculated for at least one first sub-region (1);
b) at least one sub-region (2) that has not yet been calculated is formed or selected from among a quantity of predetermined sub-regions (2, 3, 4, 5);
c) for each sub-region (2) in the step b) the local transformation parameters are calculated, the local transformation parameters of at least one neighboring sub-region (1) that has already been successfully treated being used as starting values;
d) the steps b) and c) are repeated a number of times until the local transformation parameters have been calculated for an adequate distribution of sub-regions.

2. A method as claimed in claim 1, **characterized in that** the sub-regions (1,2,3, 4, 5) are chosen so as to be sufficiently small, so that the local transformation parameters may be assumed to be constant for all points of the sub-region while maintaining a predetermined accuracy.

3. A method as claimed in claim 1 or 2, **characterized in that** exclusively sub-regions (1, 2, 3, 4, 5) that contain adequately strong structuring are used.

4. A method as claimed in at least one of the claims 1 to 3, **characterized in that** the sub-regions are chosen so as to overlap at least partly.

5. A method as claimed in at least one of the claims 1 to 4, **characterized in that** prior to the step a) a suitable distribution of sub-regions (1, 2, 3, 4, 5) is determined in one of the images (10), and that in the step b) at least one sub-region (2) that has not yet been calculated is selected from said distribution.

6. A method as claimed in claim 5, **characterized in that** the sub-region (2) that is selected in the step b) is the sub-region that has the highest weighting factor from among all sub-regions (2, 3, 4, 5) that have not yet been calculated, a high weight being induced by a small distance from an already registered sub-region and/or a high accuracy of the transformation parameters determined for the already registered sub-region.

7. A method as claimed in at least one of the claims 1 to 6, **characterized in that** the local transformation parameters calculated for a sub-region (2) are used further exclusively if their accuracy exceeds a specified threshold value.

8. A method as claimed in at least one of the claims 1 to 7, **characterized in that** in the step c) the starting value of the local transformation parameters is determined as a mean value of the already calculated local transformation parameters that is weighted with the distance of the associated sub-regions (1) and/or with their registration accuracy.

9. A computer program for calculating the transformation which transforms two digitized images (10, 10') of an object, preferably acquired by means of computed tomography or magnetic resonance tomography into each other, **characterized in that** the computation is performed by means of a method as claimed in one of the claims I to 8.

10. A device for calculating the transformation which transforms two digitized images (10, 10') of an object, preferably acquired by means of computed tomography or magnetic resonance tomography into each other, comprising a central processing unit that is connected to at least one memory unit for the images and for a computer program executable by the central processing unit, the program being adapted to control the calculation of the transformation according to a method as claimed in one of the claims 1 to 9.

## Revendications

1. Procédé de calcul de la transformation qui fait correspondre l'une avec l'autre deux images (10, 10') obtenues de préférence par tomographie informatisée ou résonance magnétique nucléaire, les paramètres de transformation locaux pour des zones partielles (1, 2, 3, 4, 5) des images ayant d'abord été successivement calculés et toute la transformation étant ensuite calculée à partir de là,
**caractérisé en ce que** le calcul successif des paramètres locaux de transformation pour les zones partielles est exposé comme suit :
a) pour au moins une première zone partielle (1), les paramètres de transformation locaux sont préalablement déterminés ou calculés;
b) au moins une zone partielle (2) encore non calculée est produite ou sélectionnée à partir d'une quantité de zones partielles (2, 3, 4, 5) préalablement déterminées;
c) pour chaque zone partielle (2) de l'étape b), les paramètres de transformation locaux sont calculés, les paramètres de transformation locaux étant utilisés comme valeur de départ par au moins une zone partielle (1) adjacente déjà traitée avec succès;
d) les étapes b) et c) sont répétées jusqu'à ce que les paramètres de transformation locaux soient calculés pour une distribution suffisante des zones partielles.

2. Procédé selon la revendication 1, **caractérisé en ce que** les zones partielles (1, 2, 3, 4, 5) sont sélectionnées suffisamment petites pour que les paramètres de transformation locaux puissent être admis comme constants pour tous les points de la zone partielle en respectant une précision préalablement déterminée.

3. Procédé selon l'une des revendications 1 ou 2, **caractérisé en ce que** sont seules utilisées les zones partielles (1, 2, 3, 4, 5) qui contiennent une structuration suffisamment importante.

4. Procédé selon au moins l'une des revendications 1 à 3, **caractérisé en ce que** les zones partielles sont choisies pour se chevaucher, du moins en partie.

5. Procédé selon au moins l'une des revendications 1 à 4, **caractérisé en ce qu'**avant l'étape a), une distribution adéquate des zones partielles (1,2, 3, 4, 5) est déterminée dans l'une des images (10) et que, dans l'étape b), au moins une zone partielle (2) encore non calculée est sélectionnée à partir de cette distribution.

6. Procédé selon la revendication 5, **caractérisé en ce que** la zone partielle (2) sélectionnée dans l'étape b) est la zone partielle qui présente le facteur de pondération le plus élevé de toutes les zones partielles (2, 3, 4, 5) encore non calculées, une petite distance par rapport à une zone partielle déjà enregistrée et/ou une précision élevée des paramètres de transformation déterminés pour la zone partielle déjà enregistrée conduisant à une pondération élevée.

7. Procédé selon au moins l'une des revendications 1 à 6, **caractérisé en ce que** les paramètres de transformation locaux calculés pour une zone partielle (2) ne sont ensuite utilisés que lorsque la précision est supérieure à une valeur-seuil préalablement déterminée.

8. Procédé selon au moins l'une des revendications 1 à 7, **caractérisé en ce que**, dans l'étape c), la valeur de départ des paramètres de transformation locaux est déterminée comme une valeur moyenne des paramètres de transformation locaux déjà calculés, pondérée avec l'éloignement des zones partielles (1) correspondantes et/ou de leur précision d'enregistrement.

9. Programme informatique pour le calcul de la transformation qui fait correspondre l'une à l'autre deux images (10, 10') numérisées d'un objet, obtenues de préférence par tomographie informatisée ou résonance magnétique nucléaire, **caractérisé en ce que** le calcul est effectué par un procédé selon l'une des revendications 1 à 8.

10. Dispositif de calcul de la transformation qui fait correspondre l'une à l'autre deux images (10, 10') numérisées d'un objet, obtenues de préférence par tomographie informatisée ou résonance magnétique nucléaire, contenant un processeur central qui est relié avec au moins une mémoire pour les images ainsi que pour un programme informatique exécutable sur le processeur central, le programme informatique étant conçu de telle sorte que le calcul de la transformation soit effectué par un procédé selon l'une des revendications 1 à 9.
